# EUROPÄISCHE PATENTSCHRIFT

(11) **EP 1 389 569 B1**
(45) Veröffentlichungstag und Bekanntmachung des Hinweises auf die Patenterteilung: **30.08.2006**
(21) Anmeldenummer: 03016519.5
(22) Anmeldetag: 22.07.2003
(51) Int. Cl.: B60R 21/26

(54) **Gaserzeugungsvorrichtung**
Gas generator device
Dispositif générateur de gaz

(30) Priorität: 12.08.2002 DE 20212384 U
(43) Veröffentlichungstag der Anmeldung: 18.02.2004
(73) Patentinhaber: TRW Airbag Systems GmbH, 84544 Aschau am Inn (DE)
(72) Erfinder: Englbrecht, Karl, 84513 Erharting (DE); Schwuchow, Karsten, 83512 Wasserburg (DE)
(74) Vertreter: Kitzhofer, Thomas

(56) Entgegenhaltungen:
- US-A- 3 877 719
- US-A- 4 021 058
- US-A- 6 152 484

## Beschreibung

Die Erfindung betrifft eine Gaserzeugungsvorrichtung nach dem Oberbegriff des Anspruchs 1.

Gaserzeugungsvorrichtungen für Sicherheitseinrichtungen an einem Fahrzeug weisen zum Teil Gasleitrohre auf, die den Vorteil haben, daß der Gasgenerator von dem Gasverbraucher (z.B. Gassack oder Gurtstraffer) weiter entfernt angeordnet sein kann. Darüber hinaus ermöglichen Gasleitrohre auch eine großflächigere und gleichmäßigere Abströmung zum Verbraucher, z.B. bei einem großflächigen Window-bag, bei dem sich ein Gasleitrohr mit auf seiner Länge verteilten seitlichen Ausströmöffnungen in das Innere des Window-bags erstrecken kann.

Die Gasgeneratoren sollten im Hinblick auf ein unbeabsichtigtes Aktivieren des Gasgenerators während des Transportes oder der Lagerung im nicht eingebauten Zustand schubneutral ausgeführt sein.

Die DE 100 33 319 A1 beschreibt eine gattungsgemäße Gaserzeugungsvorrichtung, bei der gemäß Figur 3 ein Rohr mit einem Flansch von außen an einer Seite des Außengehäuses befestigt wird. An dem Rohr sind Rasthaken befestigt, die in Öffnungen im Außengehäuse eindringen.

Die Erfindung schafft eine einfach aufgebaute Gaserzeugungsvorrichtung, die eine gute, gasdichte Befestigung zwischen Gasleitrohr und Außengehäuse ermöglicht. Zudem soll nicht nur eine einfache, sichere Montage der Einzelteile, sondern auch ein einfacher Transport der Einzelteile ermöglicht werden. Dies wird durch eine Gaserzeugungseinrichtung nach Anspruch 1 gelöst. Bei der erfindungsgemäßen Gaserzeugungsvorrichtung haben die Öffnungen im Außengehäuse eine Doppelfunktion, indem sie einerseits der Befestigung des Gasleitrohres dienen und andererseits gleichzeitig, bei nicht befestigtem Gasleitrohr, als Ausströmöfmungen für das Gas dienen. Dies erlaubt es, Gasgenerator und Gasleitrohr getrennt zu lagern und zu transportieren und das Gasleitrohr kurz vor der endgültigen Montage schnell und einfach am Gasgenerator zu befestigen. Im Transportzustand ist also das Gasleitrohr nicht am Gasgenerator befestigt, was es einfacher macht, den Gasgenerator schubneutral auszuführen. Die Schubneutralität ist bei befestigtem Gasleitrohr üblicherweise nicht mehr gegeben. Über wenigstens eines der beiden Öffnungen ragt das Gasleitrohr in das Innere des Gasgenerators, was die Anbringung und die Lagefixierung des Gasleitrohres verbessert, wobei das Gasleitrohr sich auch durch beide Öffnungen und durch das gesamte Außengehäuse hindurch erstrecken kann.

Indem das Gasleitrohr zumindest in das Innere des Gasgenerators ragt, vorzugsweise durch das Außengehäuse sogar hindurchragt, läßt sich eine weitgehende Abdichtung der Öffnungen, wenn das Gasleitrohr montiert ist, relativ einfach erreichen. Zu betonen ist aber, daß es bei bestimmten Ausführungsformen nicht erforderlich ist, eine vollständige Abdichtung zwischen dem Außengehäuse und dem Gasleitrohr zu erreichen, wenn z.B. aus Kostengründen kleine Leckageströme tolerierbar sind.

Wenn der Gasgenerator eine Mittelachse hat und die beiden Öffnungen diametral hierzu angeordnet sind, ist bezüglich nur dieser beiden Öffnungen auf jeden Fall eine Schubneutralität gewährleistet. Zu betonen ist aber, daß es theoretisch möglich wäre, neben den beiden, dem Gasleitrohr zugeordneten Öffnungen auch weitere Ausströmöffnungen vorzusehen, wenn beispielsweise der Gasgenerator in einer Kammer eines Gassackes untergebracht ist und das Gasleitrohr zu einer anderen Kammer führt.

Darüber hinaus können die beiden Öffnungen aber auch die einzigen Aus-strömöffnungen des Gasgenerators bei nicht befestigtem Gasleitrohr sein.

Wenn sich das Gasleitrohr ins Innere des Gasgenerators erstreckt, kann es sinnvoll sein, daß das Gasleitrohr seitliche Einlaßöffnungen besitzt.

Eine Möglichkeit der einfachen Befestigung des Gasleitrohres besteht darin, daß dieses an einem aus dem Außengehäuse herausragenden Ende einen Anschlag und am entgegengesetzten Ende eine Spannvorrichtung, z.B. eine Mutter hat. Der Anschlag kann z.B. ein durch Umformen des Rohres gebildeter Flansch sein, zwischen dem und der Mutter das Außengehäuse geklemmt wird.

Ein axiales Ende des Gasleitrohres kann ggf. verschlossen sein.

Eine Ausihnmgsform der Erfindung sieht vor, daß der Gasgenerator wenigstens zweistufig ausgebildet ist und das Gasleitrohr zwischen wenigstens zwei Stufen angeordnet ist, also den gemeinsamen Auslaß wenigstens zweier Stufen bildet.

Diesbezüglich kann ein gemeinsamer Ausströmraum zwischen zwei Stufen vorgesehen sein, in den das Gasleitrohr mündet. Die "Stufen" sind entweder, bei einem rein pyrotechnischen Gasgenerator, die Brennkammern oder, bei einem Hybrid-Gasgenerator, die mit Druckgas gefüllten Kammern. Wenn der Ausströmraum zwischen den beiden Stufen, das heißt zwischen den Brennkammern oder den mit Druckgas gefüllten Kammern liegt, kann das Gasleitrohr auch als Zwischenwand zwischen den beiden Stufen wirken, die ein Überzünden bzw. Öffnen der entgegengesetzten Kammer verhindert, wenn nur eine Stufe aktiviert werden soll.

Das Gasleitrohr kann auch als eine Art Filter wirken, wenn seine Einlaßöffnungen der Gasströmung aus zumindest einer Brennkammer oder einer mit Druckgas gefüllten Kammer nicht unmittelbar zugewandt ist, z.B. indem sie 90° zu der Gasströmung angeordnet oder dieser sogar abgewandt ist.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Längsschnittansicht durch einen zweistufigen Gasgenerator einer Gaserzeugungsvorrichtung nach der Erfindung,
- Figur 2 eine Ansicht des Gasgenerators nach Fig 1 von oben oder von unten,
- Figur 3 die komplett montierte Gaserzeugungsvorrichtung nach der Erfindung,
- Figur 4 eine Längsschnittansicht durch eine Gaserzeugungsvorrichtung gemäß einer weiteren Ausführungsform, und
- Figur 5 eine Variante der Ausführungsform nach Fig. 4.

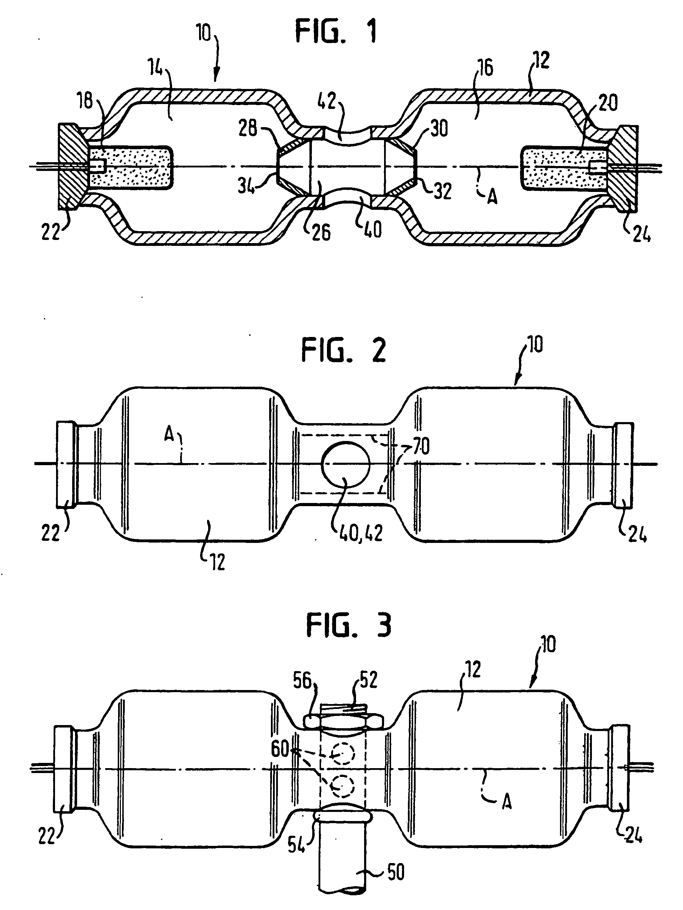

In Fig. 1 ist ein Gasgenerator 10 dargestellt, der ein Außengehäuse 12 aufweist. Der Gasgenerator 10 ist ein zweistufiger Rohrgasgenerator, dessen erste Stufe durch eine mit Druckgas gefüllte Kammer 14 und dessen zweite Stufe durch eine ebenfalls mit Druckgas gefüllte Kammer 16 gebildet sind. Das rohrformige Außengehäuse 12 hat an seinen axialen Enden Öffnungen, über die Zünder 18, 20 in das Innere der zugeordneten Kammer 14 bzw. 16 ragen. Stopfenartige Verschlüsse 22, 24 dichten die Kammern 14 bzw. 16 nach außen, zu den Enden ab.

Die Kammern 14, 16 besitzen einen zwischen ihnen angeordneten gemeinsamen Ausströmraum 26, zu dem hin sie jeweils mittels eines Membranhalters 28, 30 und zugeordneter, darauf befestigter Membrane 32, 34 abgedichtet sind.

Das Außengehäuse 12 weist im Bereich des Ausströmraums 26 eine nutartige Vertiefung auf. Am Grund dieser Vertiefung sind zwei bezüglich der Mittelachse A des Außengehäuses 12 diametral angeordnete durchgehende Öffnungen 40, 42 im Außengehäuse 12 vorgesehen.

Beide Öffnungen 40, 42 sind axial auf halbem Wege zwischen den Membra-nen 34, 36 angeordnet.

Der Gasgenerator 10 ist in sich schubneutral ausgeführt. Die einzigen Ausströmöffnungen für das bei Zünden zumindest eines Zünders 18, 20 freiwerdende Gas bilden die Öffnungen 40, 42. Da diese gleichen Durchmesser haben und diametral zueinander angeordnet sind, entsteht bei einer unbeabsichtigten Aktivierung des Gasgenerators beim Transport oder bei der Lagerung kein Schub.

In Fig. 3 ist eine Gaserzeugungsvorrichtung dargestellt, die aus dem zuvor erläuterten Gasgenerator 10 und einem Gasleitrohr 50 besteht. Das Gasleitrohr 50 ist nur an einem Ende, d.h. abschnittsweise, dargestellt, mit seinem längeren Abschnitt erstreckt es sich zu einem nicht gezeigten Gassack oder einem anderen Gasverbraucher. Das gezeigte Ende ist linear ausgeführt und erstreckt sich in dem in Fig. 3 gezeigten, am Außengehäuse 12 befestigten Zustand in einem rechten Winkel zur Mittelachse A.

Vor der Montage der Gaserzeugungsvorrichtung in das Fahrzeug wird das Gasleitrohr 50, dessen Außendurchmesser im wesentlichen dem Innendurchmesser der Öffnungen 40, 42 entspricht, durch diese Öffnungen 40, 42 hindurchgesteckt, bis das freie Ende 52, das mit einem Außengewinde versehen ist, aus dem Außengehäuse 12 wieder herausragt. An der Öffnung 40 besitzt das Gasleitrohr 50 einen als Anschlag wirkenden Wulst 54, mit dem es am Außengehäuse 12 anliegt. Mit einer Spannvorrichtung in Form einer Mutter 56, die auf das Außengewinde am freien Ende 52 des Gasleitrohres 50 aufgedreht wird, lassen sich Außengehäuse 12 und Gasleitrohr 50 gegeneinander verspannen und aneinander befestigen. Das mit dem Außengewinde versehene Ende 52 des Gasleitrohres 50 ist z.B. mittels eines Stopfens verschlossen. Über das Gasleitrohr 50 werden die Öffnungen 40, 42 nach außen hin weitgehend oder sogar vollständig abgedichtet.

Zur besseren Abdichtung können O-Ringe zwischen Außengehäuse 12 und Gasleitrohr 50 vorgesehen sein. Darüber hinaus ist im Bereich des Wulstes 54 und der Mutter 56 auch eine Abflachung des Außengehäuses 12 durch Umformen oder durch Bearbeitung denkbar.

In dem in dem Ausströmraum 26 vorhandenen Abschnitt hat das Gasleitrohr 50 mehrere seitliche Einlaßöffnungen 60, die, bezogen auf Fig. 3, in die Zeichenebene hinein- und aus dieser herausweisen, also in etwa 90° zu den durch die Membran 34 und die Membran 36 gebildeten Ebenen stehen. Die Einlaßöffnungen 60 sind also den Kammern 12, 14 nicht unmittelbar zugewandt.

Die Funktionsweise der Gaserzeugungsvorrichtung wird im folgenden erläutert. Der Gasgenerator 10 wird für den Transport öder eine spätere Lagerung, ohne daß Vorrichtungen zur Gewährleistung der Schubneutralität an ihm befestigt werden müssen, in beliebigen Aufnahmebehältern untergebracht.

Beim Automobilhersteller wird dann, wie erläutert, das Gasleitrohr 50 am Au-βengehäuse 12 befestigt. Die Gaserzeugungsvorrichtung wird so in das Fahrzeug eingebaut.

Bei einem Unfall wird entweder einer oder es werden beide Zünder 18, 20 aktiviert. Die entstehenden Druckwellen zerstören die zugeordnete Membran 34 oder 36, so daß sich das erzeugte heiße Gas und das unter Druck stehende, gespeicherte Gas aus den Kammern 14, 16 vermischt und in den Ausströmraum 26 gelangt. Aufgrund der seitlich zur Hauptausströmrichtung angeordneten Einlaßbohrungen 60 ergibt sich eine Art Filterwirkung. Heiße Partikel können somit im Gasgenerator 12 zurückgehalten werden und gelangen nicht in das Gasleitrohr 50. Das heiße Gas strömt über die Einlaßöffnungen 60 in das Innere des Gasleitrohrs 50 und zum Gasverbraucher, z. B. einem Gassack oder einem Gurtstraffer.

Das Gasleitrohr 50 hat auch noch eine zusätzliche Funktion, nämlich wenn nur ein Zünder 18, 20 oder die Zünder 18,20 zeitversetzt aktiviert wird bzw. werden. Dann muß nämlich ausgeschlossen werden, daß über die entstehende Druckwelle auch die nicht der Stufe des aktivierten Zünders 18, 20 zugeordnete Membran 34, 36 mit zerstört wird. Das ausströmende Gas aus der aktivierten Stufe prallt nämlich am Gasleitrohr 50 teilweise ab und kann zumindest nicht unmittelbar auf die nicht zu zerstörende Membran 34, 36 treffen. Diese Wirkung kann noch verstärkt werden, wenn, bezogen auf Fig. 2, die Außenseite des Gasleitrohrs 50 bis nahe an die Innenseite 70 des Außengehäuses 12 reicht.

Andere Befestigungsmechanismen als die dargestellten wären beispielsweise eine Art Kegelsitz des Gasleitrohrs 50 in einer Öffnung 40, 42 oder z.B. Sprengringe oder dergleichen. Darüber hinaus wäre es auch denkbar, statt der Mutter 56 eine Schraube zu verwenden und das Ende des Gasleitrohrs 50 im Inneren des Ausströmraums 26 enden zu lassen. Die Schraube könnte dann in ein Innengewinde am Ende des Gasleitrohrs 50 eingedreht werden und würde auch der Abdichtung des Gasleitrohrs 50 dienen.

Die Öffnungen 40, 42 müssen auch nicht kreisrund sein, es können auch andere Öffnungsformen vorgesehen sein, die beispielsweise auch geeignet sind, eine vorgegebene Ausrichtung der Einlaßöffnungen 60 zur Mittelachse A sicherzustellen.

Zu betonen ist auch, daß die Gaserzeugungsvorrichtung nicht auf einen mehrstufigen Gasgenerator oder einen Hybridgasgenerator beschränkt ist. Es wäre auch möglich, die spezielle Anordnung der Öffnungen 40, 42 und das darin montierte Gasleitrohr 50 bei einem rein pyrotechnischen Gasgenerator oder bei einem einstufigen Gasgenerator vorzusehen.

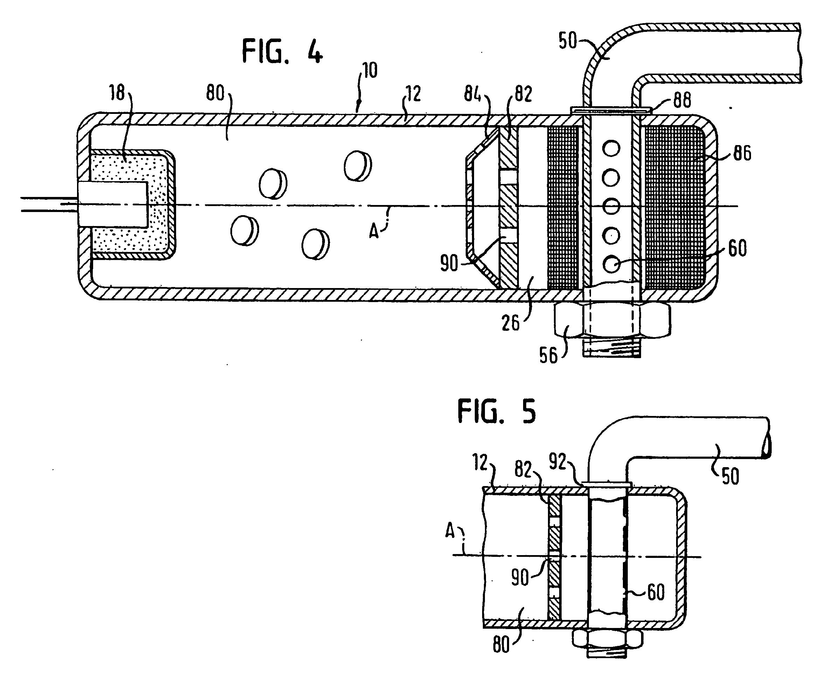

Eine Gaserzeugungsvorrichtung mit einem einstufigen, rein pyrotechnischen Gasgenerator ist in Fig. 4 dargestellt. Die Brennkammer trägt das Bezugszeichen 80. Vor der Brennkammerwand 82 ist eine abgewinkelte Scheibe 84 mit Durchströmöffnungen angeordnet. Im Ausströmraum 26 ist um das Gasleitrohr 50 herum ein Filter 86 angeordnet, das jedoch auch weggelassen werden kann. Das Gasleitrohr ist mit einem Anschlag in Form eines Stiftes 88 am Außengehäuse 12 befestigt.

In Fig. 5 ist zu erkennen, daß die Einlaßöffnungen 60 der Brennkammer 80 völlig abgewandt sind, während sie in Fig. 4 noch 90° zu den Ausströmöffnungen 90 in der Brennkammerwand 82 und damit 90° zur Mittelachse A des Gasgenerators 10 liegen. Als Anschlag dient bei dieser Ausführungsform ein Sicherungsring 92.

## Patentansprüche

1. Gaserzeugungsvorrichtung, mit einem Gasgenerator (10), der ein Außengehäuse (12) hat, und
einem an den Gasgenerator (10) angeschlossenen Gasleitrohr (50), über das Gas aus dem Gasgenerator (10) abströmt,
wobei das Außengehäuse (12) wenigstens zwei Öffnungen (40, 42) hat, über die das Gasleitrohr (50) am Außengehäuse (12) befestigt ist und über die bei nicht befestigtem Gasleitrohr (50) Gas ausströmen kann
**dadurch gekennzeichnet, daß**
der Gasgenerator (10) ohne das an ihm angebrachte Gasleitrohr (50) schubneutral ist und daß über wenigstens eine der Öffnungen (40, 42) das zylindrische Gasleitrohr (50) ins Innere des Gasgenerators (10) ragt.

2. Gaserzeugungsvorrichtung nach Anspruch 1, **dadurch gekennzeichnet, daß** die Öffnungen (40; 42), über die das Gas bei nicht befestigtem Gasleitrohr (50) ausströmen kann, bezogen auf das Außengehäuse (12) auf entgegengesetzten Seiten liegen.

3. Gaserzeugungsvorrichtung nach Anspruch 1 oder 2, **dadurch gekennzeichnet, daß** sich das Gasleitrohr (50) durch beide Öffnungen (40, 42) hindurch und durch das Außengehäuse (12) erstreckt.

4. Gaserzeugungsvorrichtung nach einem der vorhergehenden Ansprüche, **dadurch gekennzeichnet, daß** der Gasgenerator (10) eine Mittelachse (A) hat und die beiden Öffnungen (40, 42) diametral hierzu angeordnet sind.

5. Gaserzeugungsvorrichtung nach einem der vorhergehenden Ansprüche, **dadurch gekennzeichnet, daß** die beiden Öffnungen (40, 42) die einzigen Ausströmöffnungen des Gasgenerators (10) bei nicht an ihm angebrachtem Gasleitrohr (50) sind.

6. Gaserzeugungsvorrichtung nach einem der vorhergehenden Ansprüche, **dadurch gekennzeichnet, daß** sich das Gasleitrohr (50) ins Innere des Gasgenerators (10) erstreckt und seitliche Einlaßöffnungen (60) besitzt.

7. Gaserzeugungsvorrichtung nach einem der vorhergehenden Ansprüche, **dadurch gekennzeichnet, daß** das Gasleitrohr (50) an einem aus dem Außengehäuse (12) herausragenden Ende einen Anschlag hat und daß am entgegengesetzten Ende eine Spannvorrichtung angreift.

8. Gaserzeugungsvorrichtung nach Anspruch 7, **dadurch gekennzeichnet, daß** die Spannvorrichtung eine Mutter 56 oder eine Schraube ist.

9. Gaserzeugungsvorrichtung nach einem der vorhergehenden Ansprüche, **dadurch gekennzeichnet, daß** ein Ende des Gasleitrohres (50) verschlossen ist.

10. Gaserzeugungsvorrichtung nach einem der vorhergehenden Ansprüche, **dadurch gekennzeichnet, daß** der Gasgenerator (10) wenigstens zweistufig ausgebildet ist und das Gasleitrohr (50) zwischen wenigstens zwei Stufen angeordnet ist.

11. Gaserzeugungsvorrichtung nach Anspruch 10, **dadurch gekennzeichnet, daß** die unterschiedlichen Stufen des Gasgenerators (10) einen gemeinsamen Ausströmraum (26) für freiwerdendes Gas besitzen, in welchen das Gasleitrohr (50) mündet.

12. Gaserzeugungsvorrichtung nach Anspruch 10 oder 11, **dadurch gekennzeichnet, daß** die unterschiedlichen Stufen des Gasgenerators durch verschlossene, mit Druckgas gefüllte Kammern (14, 16) gebildet sind.

## Claims

1. A gas generating device, comprising a gas generator (10) which has an outer housing (12) and
a gas conduit pipe (50) connected to the gas generator (10) and via which gas flows out from the gas generator (10),
the outer housing (12) having at least two openings (40, 42) by means of which the gas conduit pipe (50) is fastened to the outer housing (12) and via which gas can flow out when the gas conduit pipe (50) is not fastened,
**characterized in that**
the gas generator (10) is neutral with respect to thrust without the gas conduit pipe (50) fitted to it and that the cylindrical gas conduit pipe (50) projects into the interior of the gas generator (10) via at least one of the openings (40, 42).

2. The gas generating device according to Claim 1, **characterized in that** the openings (40; 42) via which the gas can flow out when the gas conduit pipe (50) is not fastened, are situated on opposite sides in relation to the outer housing (12).

3. The gas generating device according to Claim 1 or 2, **characterized in that** the gas conduit pipe (50) extends through both openings (40, 42) and through the outer housing (12).

4. The gas generating device according to any of the preceding claims, **characterized in that** the gas generator (10) has a central axis (A) and the two openings (40, 42) are arranged diametrically hereto.

5. The gas generating device according to any of the preceding claims, **characterized in that** the two openings (40, 42) are the only outflow openings of the gas generator (10) when the gas conduit pipe (50) is not fitted thereto.

6. The gas generating device according to any of the preceding claims, **characterized in that** the gas conduit pipe (50) extends into the interior of the gas generator (10) and has lateral inlet openings (60).

7. The gas generating device according to any of the preceding claims, **characterized in that** the gas conduit pipe (50) has a stop at one end projecting out from the outer housing (12) and that at the opposite end a clamping device engages.

8. The gas generating device according to Claim 7, **characterized in that** the clamping device is a nut (56) or a screw.

9. The gas generating device according to any of the preceding claims, **characterized in that** one end of the gas conduit pipe (50) is closed.

10. The gas generating device according to any of the preceding claims, **characterized in that** the gas generator (10) is configured so as to have at least two stages and the gas conduit pipe (50) is arranged between at least two stages.

11. The gas generating device according to Claim 10, **characterized in that** the different stages of the gas generator (10) have a shared outflow space (26) for gas which is released, into which the gas conduit pipe (50) opens.

12. The gas generating device according to Claim 10 or 11, **characterized in that** the different stages of the gas generator are formed by closed chambers (14, 16) filled with compressed gas.

## Revendications

1. Dispositif générateur de gaz, comportant un générateur de gaz (10) qui a un boîtier extérieur (12), et
un conduit tubulaire de gaz (10) branché au générateur de gaz (10) et via lequel du gaz s'échappe hors du générateur de gaz (10),
le boîtier extérieur (12) ayant au moins deux ouvertures (40, 42) au moyen desquelles le conduit tubulaire de gaz (50) est fixé sur le boîtier extérieur (12) et via lesquelles du gaz peut s'échapper lorsque le conduit tubulaire de gaz (50) n'est pas fixé,
**caractérisé en ce que**
le générateur de gaz (10) est neutre vis-à-vis de la poussée sans le conduit tubulaire de gaz monté (50) sur celui-ci et **en ce que** le conduit tubulaire de gaz (50) cylindrique fait saillie à l'intérieur du générateur de gaz (10) via au moins une des ouvertures (40, 42).

2. Dispositif générateur de gaz selon la revendication 1 ou 2, **caractérisé en ce que** les ouvertures (40, 42), via lesquelles le gaz peut s'échapper lorsque le conduit tubulaire de gaz (50) n'est pas fixé, sont situées sur des côtés opposés par rapport au boîtier extérieur (12).

3. Dispositif générateur de gaz selon la revendication 1 ou 2, **caractérisé en ce que** le conduit tubulaire de gaz (50) s'étend à travers les deux ouvertures (40, 42) et à travers le boîtier extérieur (12).

4. Dispositif générateur de gaz selon l'une des revendications précédentes, **caractérisé en ce que** le générateur de gaz (10) a un axe médian (A) et les deux ouvertures (40, 42) sont agencées diamétralement par rapport à celui-ci.

5. Dispositif générateur de gaz selon l'une des revendications précédentes, **caractérisé en ce que** les deux ouvertures (40, 42) sont les seules ouvertures d'échappement du générateur de gaz (10) lorsque le conduit tubulaire de gaz (50) n'est pas monté sur celui-ci.

6. Dispositif générateur de gaz selon l'une des revendications précédentes, **caractérisé en ce que** le conduit tubulaire de gaz (50) s'étend à l'intérieur du générateur de gaz (10) et possède des ouvertures d'admission (60) latérales.

7. Dispositif générateur de gaz selon l'une des revendications précédentes, **caractérisé en ce que** le conduit tubulaire de gaz (50) a une butée sur une extrémité faisant saillie hors du boîtier extérieur (12) et **en ce qu'**un dispositif de tension s'engage à l'extrémité opposée.

8. Dispositif générateur de gaz selon la revendication 7, **caractérisé en ce que** le dispositif de tension est un écrou (56) ou une vis.

9. Dispositif générateur de gaz selon l'une des revendications précédentes, **caractérisé en ce qu'**une extrémité du conduit tubulaire de gaz (50) est fermée.

10. Dispositif générateur de gaz selon l'une des revendications précédentes, **caractérisé en ce que** le générateur de gaz (10) est réalisé au moins à deux étages et le conduit tubulaire de gaz (50) est agencé entre au moins deux étages.

11. Dispositif générateur de gaz selon la revendication 10, **caractérisé en ce que** les différents étages du générateur de gaz (10) possèdent une chambre d'échappement (26) commune pour le gaz libéré, dans laquelle le conduit tubulaire de gaz (50) débouche.

12. Dispositif générateur de gaz selon la revendication 10 ou 11, **caractérisé en ce que** les différents étages du générateur de gaz sont formés par des chambres (14, 16) fermées remplies de gaz comprimé.
